# EUROPEAN PATENT APPLICATION

(11) **EP 2 086 120 A1**
(43) Date of publication of application: **05.08.2009**
(21) Application number: 09150745.9
(22) Date of filing: 16.01.2009
(51) Int. Cl.: H04B 1/707

(54) **Spread-spectrum receiver**

(30) Priority: 31.01.2008 JP 2008020290
(71) Applicant: NEC Electronics Corporation, Kawasaki-shi, Kanagawa 211-8668 (JP)
(72) Inventor: Tomita, Takayuki, Kawasaki-shi Kanagawa (JP)
(74) Representative: Betten & Resch

(57) **Abstract**

In order to support channels for the HSUPA standard, a base station number is given to each finger at the time of RAKE reception so that the base station numbers can be discriminated from each other, thereby allowing RAKE reception to be performed separately for each different base station. Since a function to identify a base station to which each finger is assigned is provided, data from a base station 0 and data from a base station 1 can be combined as data from different base stations and thus correct data for each base station can be received.

## Description

### BACKGROUND OF THE INVENTION

### 1. Field of the Invention

The present invention relates to a spread-spectrum receiver, and in particular, to channel reception from multiple base stations at different timings.

### 2. Description of the Related Art

In recent years, the proliferation of mobile phones has increased utilization of Internet access services, such as e-mailing using mobile phones. As the resolutions of a digital camera and a screen mounted in a mobile phone become higher, there is a growing need for high-speed packet communication for transmitting/receiving data.

3GPP that is the standardization organization of the third generation mobile phone system has specified HSDPA and HSUPA as the specification of high-speed packet communication (hereinafter, referred to as the HSUPA standard). HSDPA is a technique for achieving high speed in the so-called downlink communication in the direction from a base station to a terminal, while HSUPA is a technique for achieving high speed in the uplink communication in the direction from the terminal to the base station.

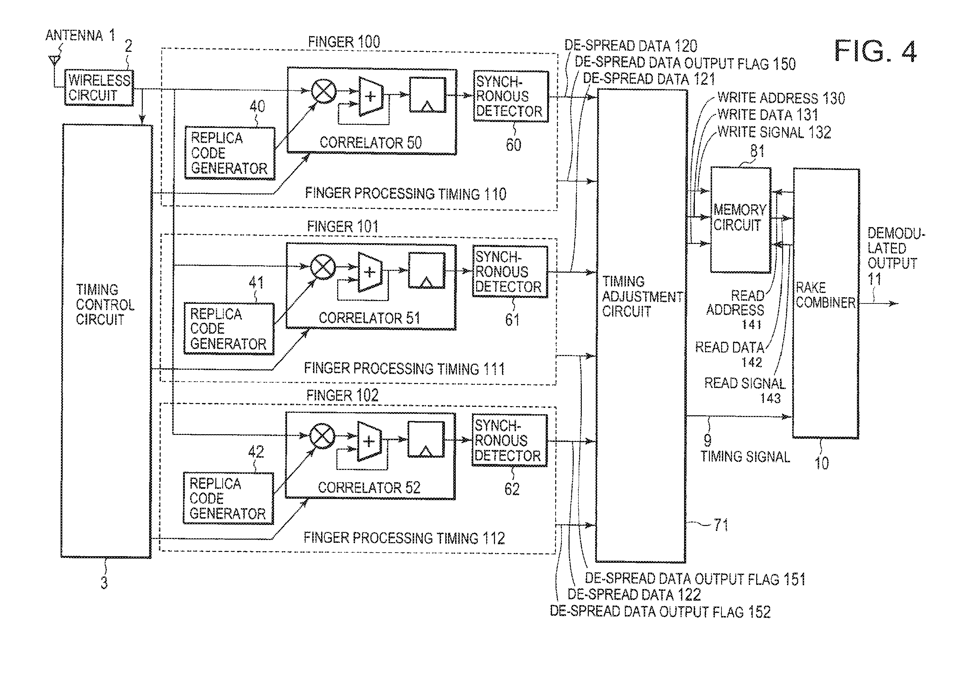

FIG. 4 is a configuration diagram of a conventional spread-spectrum receiver. The conventional spread-spectrum receiver is configured of an antenna 1, a wireless circuit 2, a timing control circuit 3, fingers 100, 101, and 102, a timing adjustment circuit 71, a memory circuit 81, and a RAKE combiner 10. The finger 100 includes a replica code generator 40, a correlator 50, and a synchronous detector 60. Similarly, the finger 101 includes a replica code generator 41, a correlator 51, and a synchronous detector 61, while the finger 102 includes a replica code generator 42, a correlator 52, and a synchronous detector 62.

In this configuration, first, a modulated wave received in the antenna 1 is converted into a baseband signal by the wireless circuit 2. The timing control circuit 3 detects multipath phases (finger processing timings 110, 111, and 112) from the baseband signal. The finger 100 performs de-spreading in accordance with the finger processing timing 110 and outputs de-spread data 120 and a de-spread data output flag 150. Similarly, the finger 101 performs de-spreading in accordance with the finger processing timing 111 and outputs de-spread data 121 and a de-spread data output flag 151, while the finger 102 performs de-spreading in accordance with the finger processing timing 112 and outputs de-spread data 122 and a de-spread data output flag 152.

The timing adjustment circuit 71 detects completion of the processing of each of the fingers 100, 101, and 102 in reference to the de-spread data output flags (150, 151, 152), and adjusts the timings of the de-spread data (120, 121, 122). When only any one of the de-spread data output flags 150, 151, and 152 is inputted, i.e., when the processing timings of the fingers 100, 101, and 102 differ from one another, the timing adjustment circuit 71 writes the de-spread data to the memory circuit 81 at the timing when the one of the de-spread data output flags 150, 151, and 152 is inputted. In this case, the de-spread data is written to the memory circuit 81 as write data 131 using a finger number, a symbol number, a write address 130, and a write signal 132.

When multiple de-spread data output flags 150, 151, and 152 are inputted to the timing adjustment circuit 71, i.e., when the processing timings of the fingers 100, 101, and 102 are the same, the de-spread data is written to the memory circuit 81 in the order based on a predetermined priority. For example, when three de-spread data output flags 150, 151, and 152 are inputted simultaneously, i. e. , when the timings of three fingers are the same, first, the de-spread data 120 is written to the memory circuit 81. Next, one cycle later, the de-spread data 121 is written to the memory circuit 81. Then, another one cycle later, the de-spread data 122 is written to the memory circuit 81.

De-spread data with twice the unit of a certain length (the unit of slot or the like) is stored into the memory circuit 81. After finishing storing the de-spread data with the unit of the certain length (the unit of slot), the timing adjustment circuit 71 generates a timing signal 9 to issue a notification to the RAKE combiner 10. In response to the timing signal 9, the RAKE combiner 10 reads the data, i.e., de-spread data (read data 142), of a read address 141 using a read signal 143, and performs RAKE combining. In parallel to this operation, the de-spread data is sequentially written to another address of the memory circuit 81. Here, since the configurations of the replica code generators 40, 41, and 42, the correlators 50, 51, and 52, and the synchronous detectors 60, 61, and 62 are conventionally known and are not directly related to the present invention, the detailed descriptions thereof are omitted here.

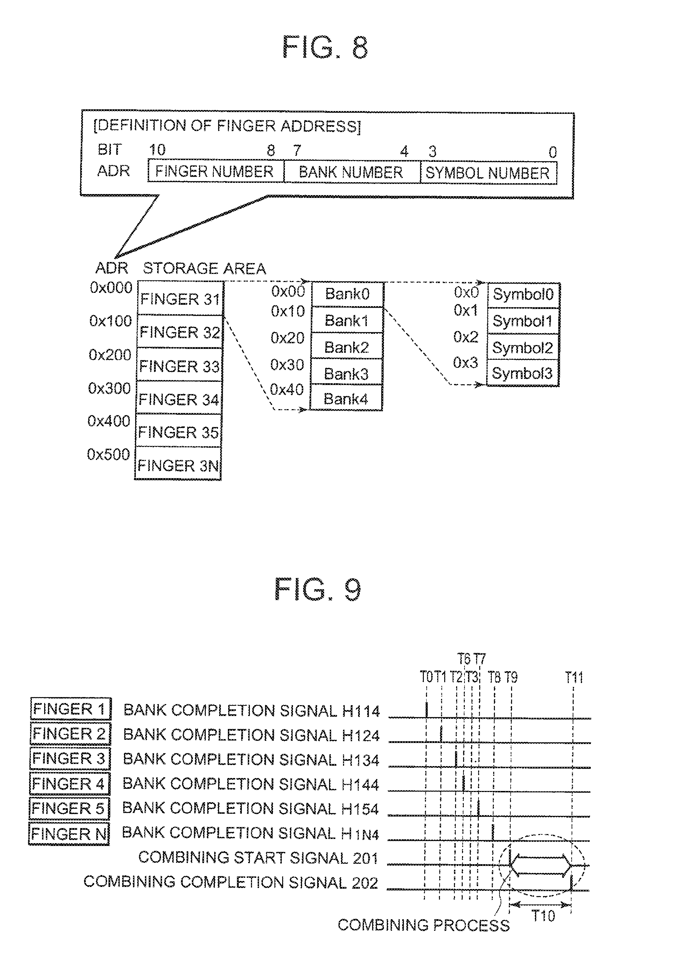

Note that, in the HSDPA standard, the base stations are synchronized with each other. For this reason, symbolic data to be inputted to the RAKE combiner is sent from the base stations at timings defined by the HSDPA standard. Thus, the symbolic data is also synchronized with each other and therefore can be combined. FIG. 9 shows the processing timing in the RAKE combiner having fingers 1 to N.

The operation thereof is described with reference to FIG. 4. After finishing the receiving process, each of the fingers 1 to N transmits a BANK completion signal to the RAKE combiner 10 via the timing adjustment circuit 71. Upon receipt of the BANK completion signal from all of the fingers 1 to N, the RAKE combiner 10 performs a combining process. Therefore, the combined signal is based on the symbolic data from multiple base stations.

As described above, the HSUPA standard is the so-called dedicated channel system and thus a terminal performs demodulation processing without knowing which base station has transmitted the de-spread data. This technology is described for instance in Japanese Patent No. 3398708.

On the other hand, the HSUPA standard is a standard developed to allow a terminal to synchronously receive baseband signals from multiple base stations (HSUPA: the packet communication standard for speeding up uplink communication specified by 3GPP Release 6 in 2006).

As described above, the conventional RAKE combiner and RAKE combining method do not identify from which base station the de-spread data has been received, and therefore cannot perform a combining process of the de-spread data for each of the base stations by sorting the data according to the base stations . Accordingly, the conventional RAKE combiner and RAKE combining method have a problem of combining the baseband signals from multiple base stations.

### SUMMARY

In order to support channels for the HSUPA standard, a base station number is given to each of fingers at the time of RAKE reception so that the base station numbers can be discriminated from one another, thereby allowing the RAKE reception to be performed separately for each of the different base stations.

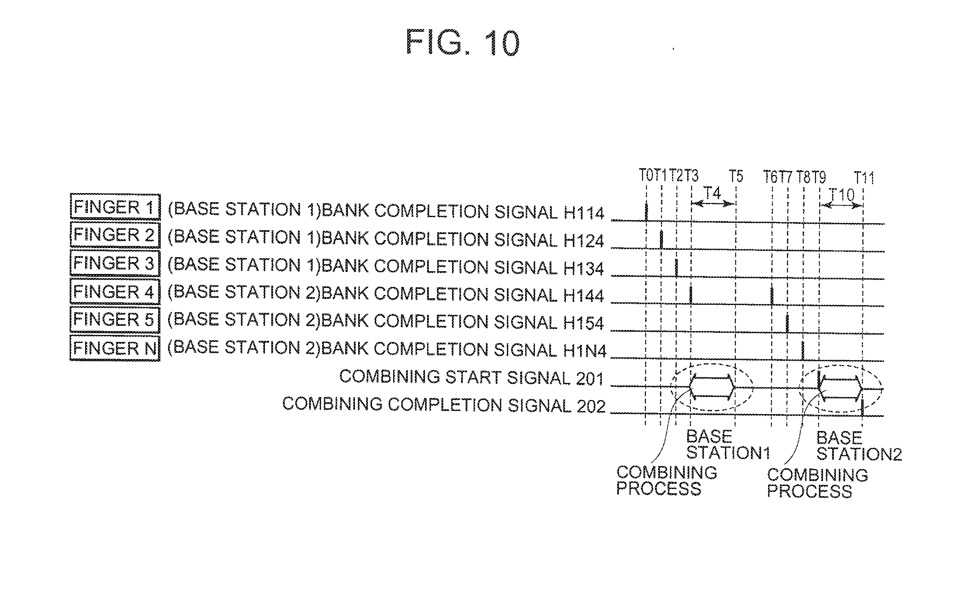

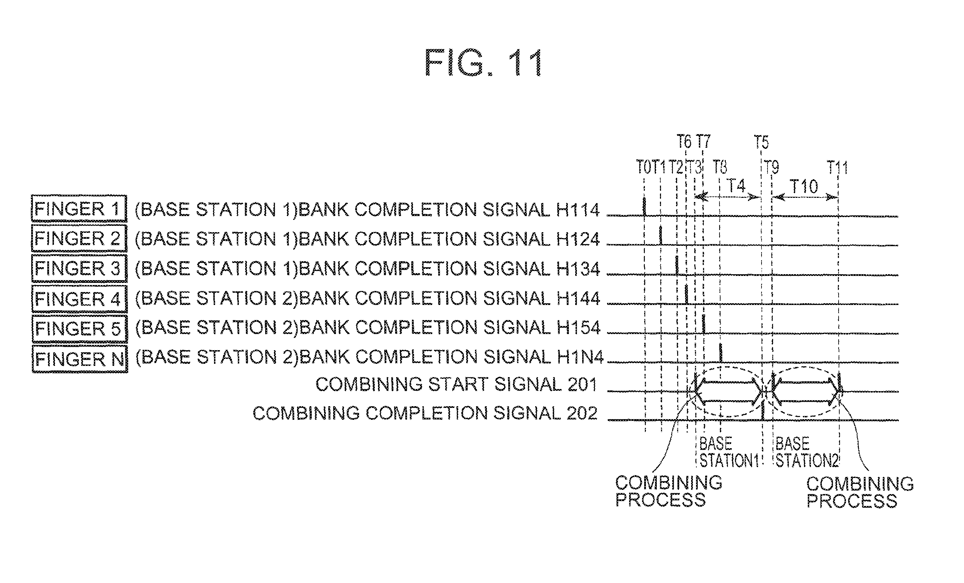

FIG. 10 and FIG. 11 show the processing timings in a RAKE combiner having fingers 1 to N. FIG. 10 shows a pattern in which the RAKE combiner starts the RAKE combining of a base station 2 after completing the RAKE combining of a base station 1, while FIG. 11 shows a pattern in which the RAKE combining of the base station 2 becomes ready during the RAKE combining of the base station 1. In either case, in response to combining start signals, the RAKE combiner separately performs the combining process for the base station 1 and the combining process for the base station 2.

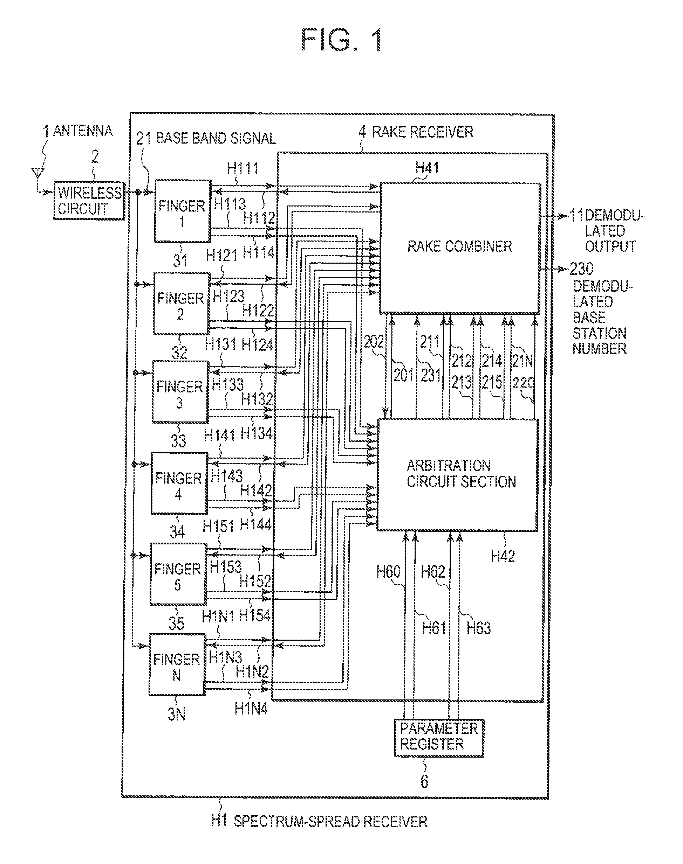

The operation thereof is described with reference to FIG. 1. Each of fingers 1 to N transmits a BANK completion signal to a RAKE combiner H41 after completing the receive processing. The RAKE combiner H41 compares base station numbers assigned to the fingers 1 to N with effective finger information that is registered in a parameter register 6 via an arbitration circuit H42, and performs a combining process in the unit of base station after receiving the BANK completion signals from all the fingers belonging to each base station.

According to the present invention, as its effect, there is provided a function to identify a base station, to which each finger is assigned, even when the finger 100 and the finger 101 shown in FIG. 4 are assigned to a base station 0 and the finger 102 is assigned to a base station 1. With this function, it is possible to combine data from the base station 0 and data from the base station 1 as data from different base stations and thereby to receive correct data for each base station.

### BRIEF DESCRIPTION OF THE DRAWINGS

FIG. 1 is a configuration diagram of a spread-spectrum receiver of the present invention.
FIG. 2 is a configuration diagram of an arbitration circuit section of the present invention.
FIG. 3 is a state transition diagram of the base station arbitration section of the present invention.
FIG. 4 is a configuration diagram of a conventional spread-spectrum receiver.
FIG. 5 is a configuration diagram of a spread-spectrum receiver of Embodiment 2.
FIG. 6 is a flowchart of a portion for determining that all the fingers for each base station have been collected, of Embodiment 2.
FIG. 7 is a control flowchart of a DSP section for each base station, of Embodiment 2.
FIG. 8 is an address map for storing received symbolic data, of Embodiment 2.
FIG. 9 is a comparison diagram with a conventional system (conventional standard).
FIG. 10 is a comparison diagram with the conventional system (conventional standard).
FIG. 11 is a comparison diagram with the conventional system (conventional standard).

### DESCRIPTION OF THE PREFERRED EMBODIMENTS

Hereinafter, embodiments of the present invention will be described with reference to the appended drawings.

FIG. 1 is a configuration diagram of a spread-spectrum receiver of the present invention. Embodiment 1 is configured of an antenna 1, a wireless circuit 2, and a spread-spectrum receiver H1 including a finger 31, a finger 32, a finger 33, a finger 34, a finger 35, a finger 3N, a RAKE receiver 4, a demodulated output 11, a demodulated base station number 230, and a parameter register 6.

The wireless circuit 2 is connected to the finger 31, the finger 32, the finger 33, the finger 34, the finger 35, and the finger 3N via a baseband signal 21. The fingers 31 to 3N in each of which a base station number is set in advance are connected to a RAKE combine H41 via symbolic data H111 of the finger 31, a read signal H112 from the RAKE combiner H41 to the finger 31, symbolic data H121 of the finger 32, a read signal H122 from the RAKE combiner H41 to the finger 32, symbolic data H131 of the finger 33, a read signal H132 from the RAKE combiner H41 to the finger 33, symbolic data H141 of the finger 34, a read signal H142 from the RAKE combiner H41 to the finger 34, symbolic data H151 of the finger 35, a read signal H152 from the RAKE combiner H41 to the finger 35, symbolic data H1N1 of the finger 3N, and a read signal H1N2 from the RAKE combiner H41 to the finger 3N.

Each of the fingers has a storage area for storing received symbolic data. FIG. 8 illustrates an address map configuration of the storage area. An address is assigned to each finger in advance, in which a finger number is assigned to the 10th to 8th bits of one address ADR, a bank number to the 7th to 4th bits, and a symbol number to the 3rd to 0th bits, and in which data is stored in the ascending order of the address, and when reaching the highest address, an offset returns to zero in the next writing. Thus, this storage area is implemented in the form of a ring buffer. Specifically, 0x000 to 0x0FF are assigned to the finger 31, 0x100 to 0x1FF to the finger 32, 0x200 to 0x2FF to the finger 33, 0x300 to 0x3FF to the finger 34, 0x400 to 0x4FF to the finger 35, and 0x500 to 0x5FF to the finger 3N.

Moreover, the BANK of each finger is divided into five, in which the address of a finger plus the offset shown below will serve as the physical address. As for this data, 0x00 to 0x0F are assigned to Bank0, 0x10 to 0x1F to Bank, 0x20 to 0x2F to Bank2, 0x30 to 0x3F to Bank3, and 0x40 to 0x4F to Bank4. Furthermore, the symbol of each finger is divided into four, in which 0x0 is assigned to Symbol0, 0x1 to Symboll, 0x2 to Symbol2, and 0x3 to Symbol3.

At the time point when all data is stored in the symbol area of each finger, the BANK completion signal of each finger is generated. Specifically, connection to an arbitration circuit section H42 is made using a base station number H113 of the finger 31, a BANK completion signal H114 of the finger 31, a base station number H123 of the finger 32, a BANK completion signal H124 of the finger 32, a base station number H133 of the finger 33, a BANK completion signal H134 of the finger 33, a base station number H143 of the finger 34, a BANK completion signal H144 of the finger 34, a base station number H153 of the finger 35, a BANK completion signal H154 of the finger 35, a base station number H1N3 of the finger 3N, and a BANK completion signal H1N4 of the finger 3N.

The RAKE receiver 4 is configured of the RAKE combiner H41 and the arbitration circuit section H42. The RAKE combiner H41 is connected to the arbitration circuit section H42 via a RAKE reception start signal 201, a RAKE reception completion signal 202, a RAKE receiving base station number 231, a base station number 211 of the finger 31, a base station number 212 of the finger 32, a base station number 213 of the finger 33, a base station number 214 of the finger 34, a base station number 215 of the finger 35, a base station number 21N of the finger 3N, and a BANK number 220 of a RAKE receiving base station.

The arbitration circuit section H42 is configured to be connected, via effective finger information H60 of a base station 0, effective finger information H61 of a base station 1, effective finger information H62 of a base station 2, and effective finger information H63 of a base station 3, to the parameter register 6, i. e. , a table for associating a base station with an effective finger, in which comparison conditions between a base station number and a fingers or the like are set in advance.

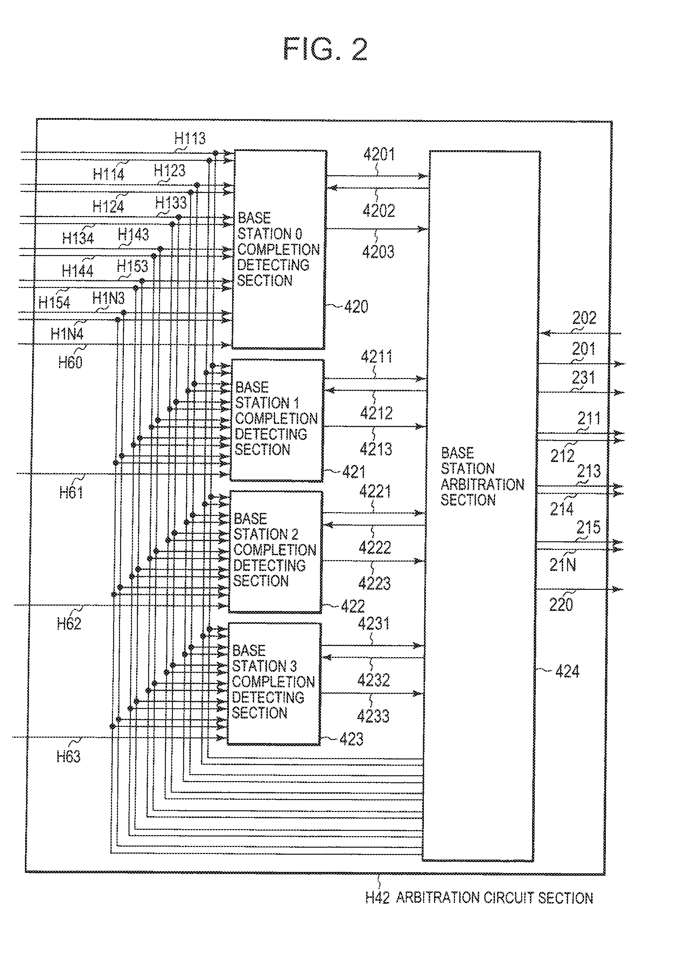

FIG. 2 is a configuration diagram of the arbitration circuit section of the present invention. The arbitration circuit section H42 of the present invention is configured of a base station 0 completion detecting section 420, a base station 1 completion detecting section 421, a base station 2 completion detecting section 422, a base station 3 completion detecting section 423, and a base station arbitration section 424.

To the base station 0 completion detecting section 420, there are connected the base station number H113 of the finger 31, the BANK completion signal H114 of the finger 31, the base station number H123 of the finger 32, the BANK completion signal H124 of the finger 32, the base station number H133 of the finger 33, the BANK completion signal H134 of the finger 33, the base station number H143 of the finger 34, the BANK completion signal H144 of the finger 34, the base station number H153 of the finger 35, the BANK completion signal H154 of the finger 35, the base station number H1N3 of the finger 3N, the BANK completion signal H1N4 of the finger 3N, and the effective finger information H60 of the base station 0.

To the base station 1 completion detecting section 421, there are connected the base station number H113 of the finger 31, the BANK completion signal H114 of the finger 31, the base station number H123 of the finger 32, the BANK completion signal H124 of the finger 32, the base station number H133 of the finger 33, the BANK completion signal H134 of the finger 33, the base station number H143 of the finger 34, the BANK completion signal H144 of the finger 34, the base station number H153 of the finger 35, the BANK completion signal H154 of the finger 35, the base station number H1N3 of the finger 3N, the BANK completion signal H1N4 of the finger 3N, and the effective finger information H61 of the base station 1.

To the base station 2 completion detecting section 422, there are connected the base station number H113 of the finger 31, the BANK completion signal H114 of the finger 31, the base station number H123 of the finger 32, the BANK completion signal H124 of the finger 32, the base station number H133 of the finger 33, the BANK completion signal H134 of the finger 33, the base station number H143 of the finger 34, the BANK completion signal H144 of the finger 34, the base station number H153 of the finger 35, the BANK completion signal H154 of the finger 35, the base station number H1N3 of the finger 3N, and the BANK completion signal H1N4 of the finger 3N, and the effective finger information H62 of the base station 2.

To the base station 3 completion detecting section 423, there are connected the base station number H113 of the finger 31, the BANK completion signal H114 of the finger 31, the base station number H123 of the finger 32, the BANK completion signal H124 of the finger 32, the base station number H133 of the finger 33, the BANK completion signal H134 of the finger 33, the base station number H143 of the finger 34, the BANK completion signal H144 of the finger 34, the base station number H153 of the finger 35, the BANK completion signal H154 of the finger 35, and the base station number H1N3 of the finger 3N, and the BANK completion signal H1N4 of the finger 3N, and the effective finger information H63 of the base station 3.

The base station 0 completion detecting section 420 is connected to the base station arbitration section 424 via a base station 0-RAKE reception request 4201, a base station 0-RAKE reception completion 4202, and a base station 0-RAKE receiving BANK number 4203.

The base station 1 completion detecting section 421 is connected to the base station arbitration section 424 via a base station 1-RAKE reception request 4211, a base station 1-RAKE reception completion 4212, and a base station 1-RAKE receiving BANK number 4213.

The base station 2 completion detecting section 422 is connected to the base station arbitration section 424 via a base station 2-RAKE reception request 4221, a base station 2-RAKE reception completion 4222, and a base station 2-RAKE receiving BANK number 4223.

The base station 3 completion detecting section 423 is connected to the base station arbitration section 424 via a base station 3-RAKE reception request 4231, a base station 3-RAKE reception completion 4232, and a base station 3-RAKE receiving BANK number 4233.

The base station arbitration section 424 connects, to the RAKE combiner H41, the RAKE reception start signal 201, the RAKE reception completion signal 202, the base station number 211 of the finger 31, the base station number 212 of the finger 32, the base station number 213 of the finger 33, the base station number 214 of the finger 34, the base station number 215 of the finger 35, the base station number 21N of the finger 3N, the BANK number 220 of an RAKE receiving base station, and the RAKE receiving base station number 231.

The operation of the spread-spectrum receiver of the present invention of FIG. 1 is described. The operation of the spread-spectrum receiver of the present invention is the same as that of the conventional one until the wireless circuit 2 converts the modulated wave received in the antenna 1 into the baseband signal 21 and outputs the baseband signal 21 to each finger.

The baseband signal 21 is inputted to the finger 31, the finger 32, the finger 33, the finger 34, the finger 35, and the finger 3N. The finger 31, the finger 32, the finger 33, the finger 34, the finger 35, and the finger 3N convert the baseband signal 21 into symbolic data, and stores the symbolic data in the storage area shown in FIG. 8.

The symbolic data H111 of the finger 31, the symbolic data H121 of the finger 32, the symbolic data H131 of the finger 33, the symbolic data H141 of the finger 34, the symbolic data H151 of the finger 35, and the symbolic data H1N1 of the finger 3N denote the symbolic data which the finger 31, the finger 32, the finger 33, the finger 34, the finger 35, and the finger 3N hold, respectively.

RAKE reception for base stations is performed in the order of the base stations of which all the belonging fingers complete the symbol reception.

When the RAKE reception processing of the base station 0 is performed, the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N to the arbitration circuit section H42, are compared with the effective finger information H60 of the base station 0 inside the parameter register 6 to discriminate the fingers belonging to the base station 0 of the fingers 31-3N. Then, the spread-spectrum receiver will wait for the BANK completion signal indicative of the symbol reception completion signal to be inputted from all the fingers to the arbitration circuit section H42. Upon completion of the symbol reception of all the fingers, the RAKE reception start signal 201, the base station number belonging to the base station 0 of the fingers 31-3N, and the RAKE receiving base station number 231 are outputted from the arbitration circuit section H42 to the RAKE combiner H41. In order to read data of the base station number belonging to the base station 0 from the fingers 31-3N, the RAKE combiner H41 outputs a read signal to the fingers 31-3N belonging to the base station 0, and then reads, from each of the fingers, symbolic data in the ascending order of the address, and performs RAKE reception processing thereon. Moreover, the RAKE combiner H41 outputs the demodulated output 11 and a demodulated base station number 230 from the RAKE combiner H41, and outputs the RAKE reception completion signal 202 to the arbitration circuit section H42 to make a notification of the completion of the RAKE reception processing, and then enters the next-reception waiting state.

When the RAKE reception processing of the base station 1 is performed, the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N to the arbitration circuit section H42, are compared with the effective finger information H61 of the base station 1 inside the parameter register 6 to discriminate the fingers belonging to the base station 1 of the fingers 31-3N. Then, the spread-spectrum receiver will wait for the BANK completion signal indicative of the symbol reception completion signal to be inputted from all the fingers to the arbitration circuit section H42. Upon completion of the symbol reception of all the fingers, the RAKE reception start signal 201, the base station number belonging to the base station 1 of the fingers 31-3N, and the RAKE receiving base station number 231 are outputted from the arbitration circuit section H42 to the RAKE combiner H41. In order to read data of base station number belonging to the base station 1 of the fingers 31-3N, the RAKE combiner H41 outputs a read signal to the fingers 31-3N belonging to the base station 1, and then reads, from each of the fingers, symbolic data in the ascending order of address, and performs RAKE reception processing thereon. Moreover, the RAKE combiner H41 outputs the demodulated output 11 and the demodulated base station number 230 from the RAKE combiner H41, and outputs the RAKE reception completion signal 202 to the arbitration circuit section H42 to make a notification of the completion of the RAKE reception processing, and then enters the next-reception waiting state.

When the RAKE reception processing of the base station 2 is performed, the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted to the arbitration circuit section H42 from the fingers 31-3N, are compared with the effective finger information H62 of the base station 2 inside the parameter register 6 to discriminate the fingers belonging to the base station 2 of the fingers 31-3N. Then, the spread-spectrum receiver will wait for the BANK completion signal indicative of the symbol reception completion signal to be inputted from all the fingers to the arbitration circuit section H42. Upon completion of the symbol reception of all the fingers, the RAKE reception start signal 201, the base station number belonging to the base station 2 of the fingers 31-3N, and the RAKE receiving base station number 231 are outputted from the arbitration circuit section H42 to the RAKE combiner H41. In order to read data of base station number belonging to the base station 2 of the fingers 31-3N, the RAKE combiner H41 outputs a read signal to the fingers 31-3N belonging to the base station 2, and then reads, from each of the fingers, symbolic data in the ascending order of address, and performs RAKE reception processing thereon. Moreover, the RAKE combiner H41 outputs the demodulated output 11 and the demodulated base station number 230 from the RAKE combiner H41, and outputs the RAKE reception completion signal 202 to the arbitration circuit section H42 to make a notification of the completion of the RAKE reception processing, and then enters the next-reception waiting state.

When the RAKE reception processing of the base station 3 is performed, the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N to the arbitration circuit section H42, are compared with the effective finger information H63 of the base station 3 inside the parameter register 6 to discriminate the fingers belonging to the base station 3 of the fingers 31-3N. Then, the spread-spectrum receiver will wait for the BANK completion signal indicative of the symbol reception completion signal to be inputted from all the fingers to the arbitration circuit section H42. Upon completion of the symbol reception of all the fingers, the RAKE reception start signal 201, the base station number belonging to the base station 3 of the fingers 31-3N, and the RAKE receiving base station number 231 are outputted from the arbitration circuit section H42 to the RAKE combiner H41. In order to read data of base station number belonging to the base station 3 of the fingers 31-3N, the RAKE combiner H41 outputs a read signal to the fingers 31-3N belonging to the base station 3, and then reads, from each of the fingers, symbolic data in the ascending order of address, and performs RAKE reception processing thereon. Moreover, the RAKE combiner H41 outputs the demodulated output 11 and the demodulated base station number 230 from the RAKE combiner H41, and outputs the RAKE reception completion signal 202 to the arbitration circuit section H42 to make a notification of the completion of the RAKE reception processing, and then enters the next-reception waiting state.

The operation of the arbitration circuit section of the present invention of FIG. 2 is described.

When the arbitration circuit section H42 performs the RAKE reception processing of the base station 0, the base station 0 completion detecting section 420 compares the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N, with the effective finger information H60 of the base station 0 inside the parameter register 6 to discriminate the fingers belonging to the base station 0 of the fingers 31-3N. Upon completion of the symbol reception of all the fingers, the base station 0-RAKE reception request 4201 and the base station 0-RAKE receiving BANK number 4203 are outputted from the base station 0 completion detecting section 420 to the base station arbitration section 424. The base station arbitration section 424 outputs the RAKE reception start signal 201, the base station number 211 of the finger 31, the base station number 212 of the finger 32, the base station number 213 of the finger 33, the base station number 214 of the finger 34, the base station number 215 of the finger 35, the base station number 21N of the finger 3N, and the RAKE receiving base station number 231 to the RAKE combiner H41. Then, the RAKE reception completion signal 202 is inputted from the RAKE combiner H41 to the base station arbitration section 424, which then outputs the base station 0-RAKE reception completion 4202 to the base station 0 completion detecting section 420.

When the arbitration circuit section H42 performs the RAKE reception processing of the base station 1, the base station 2 completion detecting section 422 compares the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N, with the effective finger information H61 of the base station 1 inside the parameter register 6 to discriminate the fingers belonging to the base station 1 of the fingers 31-3N. Upon completion of the symbol reception of all the fingers, the base station 1-RAKE reception request 4211 and the base station 1-RAKE receiving BANK number 4213 are outputted from the base station 1 completion detecting section 421 to the base station arbitration section 424. The base station arbitration section 424 outputs, to the RAKE combiner H41, the RAKE reception start signal 201, the base station number 211 of the finger 31, the base station number 212 of the finger 32, the base station number 213 of the finger 33, the base station number 214 of the finger 34, the base station number 215 of the finger 35, the base station number 21N of the finger 3N, and the RAKE receiving base station number 231. Then, the RAKE reception completion signal 202 is inputted from the RAKE combiner H41 to the base station arbitration section 424, which then outputs the base station 1-RAKE reception completion 4212 to the base station 1 completion detecting section 421.

When the arbitration circuit section H42 performs the RAKE reception processing on the base station 2, the base station 2 completion detecting section 422 compares the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N, with the effective finger information H62 of the base station 2 inside the parameter register 6 to discriminate the fingers belonging to the base station 2 of the fingers 31-3N. Upon completion of the symbol reception of all the fingers, the base station 2-RAKE reception request 4221 and the base station 2-RAKE receiving BANK number 4223 are outputted from the base station 2 completion detecting section 422 to the base station arbitration section 424. The base station arbitration section 424 outputs, to the RAKE combiner H41, the RAKE reception start signal 201, the base station number 211 of the finger 31, the base station number 212 of the finger 32, the base station number 213 of the finger 33, the base station number 214 of the finger 34, the base station number 215 of the finger 35, the base station number 21N of the finger 3N, and the RAKE receiving base station number 231. Then, the RAKE reception completion signal 202 is inputted from the RAKE combiner H41 to the base station arbitration section 424, which then outputs the base station 2-RAKE reception completion 4222 to the base station 2 completion detecting section 422.

When the arbitration circuit section H42 performs the RAKE reception processing on the base station 3, the base station 3 completion detecting section 423 compares the base station number H113 of the finger 31, the base station number H123 of the finger 32, the base station number H133 of the finger 33, the base station number H143 of the finger 34, the base station number H153 of the finger 35, and the base station number H1N3 of the finger 3N, which are inputted from the fingers 31-3N, with the effective finger information H63 of the base station 3 inside the parameter register 6 to discriminate the fingers belonging to the base station 3 of the fingers 31-3N. Upon completion of the symbol reception of all the fingers, the base station 3-RAKE reception request 4231 and the base station 3-RAKE receiving BANK number 4233 are outputted from the base station 3 completion detecting section 423 to the base station arbitration section 424. The base station arbitration section 424 outputs the RAKE reception start signal 201, the base station number 211 of the finger 31, the base station number 212 of the finger 32, the base station number 213 of the finger 33, the base station number 214 of the finger 34, the base station number 215 of the finger 35, the base station number 21N of the finger 3N, and the RAKE receiving base station number 231 to the RAKE combiner H41. Then, the RAKE reception completion signal 202 is inputted from the RAKE combiner H41 to the base station arbitration section 424, which then outputs the base station 3-RAKE reception completion 4232 to the base station 3 completion detecting section 423.

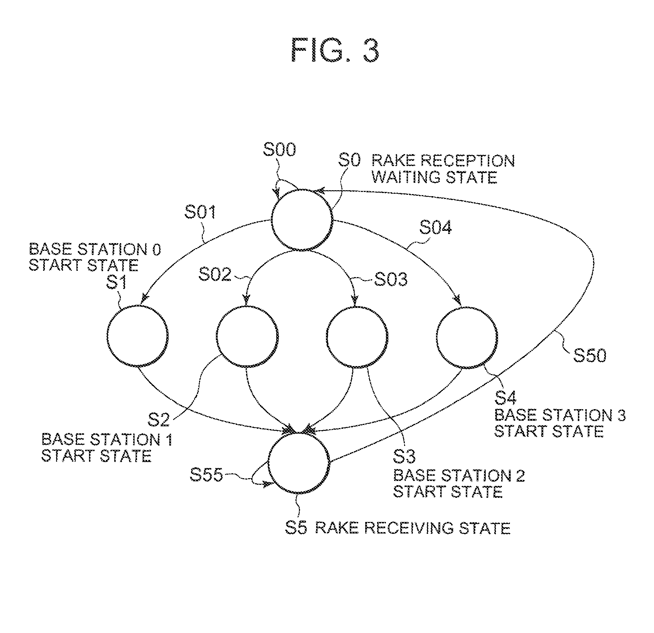

FIG. 3 is a state transition diagram of the base station arbitration section 424 of the present invention. S0 represents a RAKE reception waiting state, where the base station arbitration section 424 waits for all the RAKE reception requests to be active. S00 indicates that all the RAKE reception requests are in their inactive state. S01 indicates that when the base station 0-RAKE reception request 4201 is active, the state transits from S0 to a base station 0 start state of S1 and further transits to a RAKE receiving state of S5. S02 indicates that when the base station 1-RAKE reception request 4211 is active and the base station 0-RAKE reception request 4201 is inactive, the state transits from S0 to a base station 1 start state of S2 and further transits to the RAKE receiving state of S5.

S03 indicates that when the base station 2-RAKE reception request 4221 is active, the base station 1-RAKE reception request 4211 is inactive, and the base station 0-RAKE reception request 4201 is inactive, the state transits from S0 to a base station 2 start state of S3 and further transits to the RAKE receiving state of S5. S04 indicates that when the base station 3-RAKE reception request 4231 is active, the base station 2-RAKE reception request 4221 is inactive, the base station 1-RAKE reception request 4211 is inactive and the base station 0-RAKE reception request 4201 is inactive, the state transits from S0 to a base station 3 start state of S4 and further transits to the RAKE receiving state of S5. S5 represents the RAKE receiving state, where the base station arbitration section 424 waits for the RAKE reception completion signal 202 to be active. S55 indicates that the RAKE reception completion signal 202 is in an inactive state. S50 indicates that when the RAKE reception completion signal 202 is active, the state transits from S5 to S0.

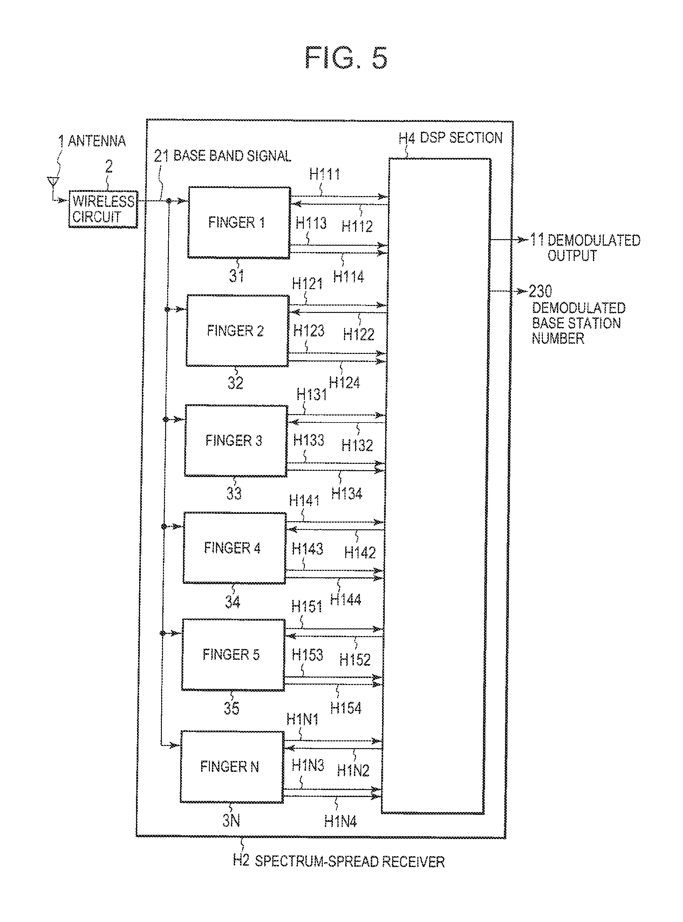

FIG. 5 is a configuration diagram of Embodiment 2 of the present invention. Embodiment 2 is configured of an antenna 1, a wireless circuit 2, and a spread-spectrum receiver H2 including a finger 31, a finger 32, a finger 33, a finger 34, a finger 35, a finger 3N, a DSP section H4, a demodulated output 11, and a demodulated base station number 230.

The wireless circuit 2 is connected to the finger 31, the finger 32, the finger 33, the finger 34, the finger 35, and the finger 3N. The wireless circuit 2 is further connected to the DSP section H4 via symbolic data H111 of the finger 31, a read signal H112 from the DSP section H4 to the finger 31, symbolic data H121 of the finger 32, a read signal H122 from the DSP section H4 to the finger 32, symbolic data H131 of the finger 33, a read signal H132 from the DSP section H4 to the finger 33, symbolic data H141 of the finger 34, a read signal H142 from the DSP section H4 to the finger 34, symbolic data H151 of the finger 35, a read signal H152 from the DSP section H4 to the finger 35, symbolic data H1N1 of the finger 3N, and a read signal H1N2 from the DSP section H4 to the finger 3N.

Each of the fingers is connected to the DSP section H4 via the base station number H113 of the finger 31, the BANK completion signal H114 of the finger 31, the base station number H123 of the finger 32, the BANK completion signal H124 of the finger 32, the base station number H133 of the finger 33, the BANK completion signal H134 of the finger 33, the base station number H143 of the finger 34, the BANK completion signal H144 of the finger 34, the base station number H153 of the finger 35, the BANK completion signal H154 of the finger 35, and the base station number H1N3 of the finger 3N, and the BANK completion signal H1N4 of the finger 3N. The demodulated output 11 and the demodulated base station number 230 are outputted from the DSP section H4.

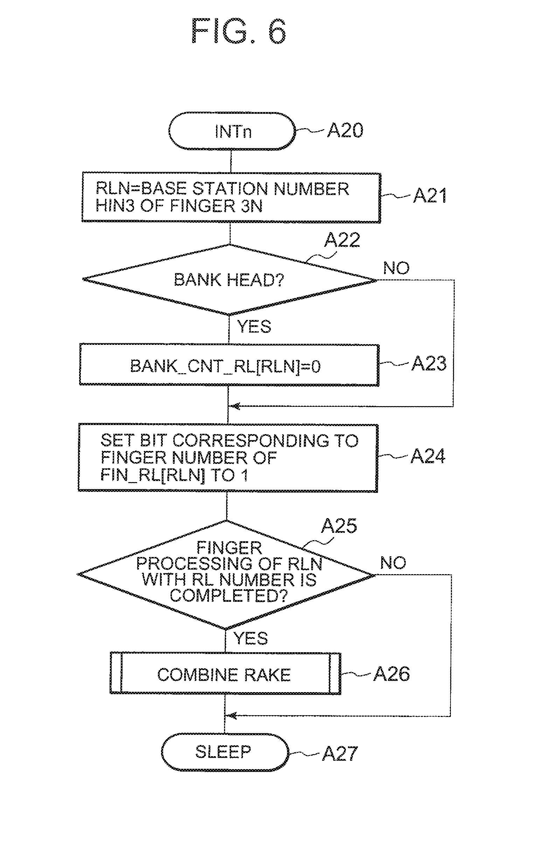

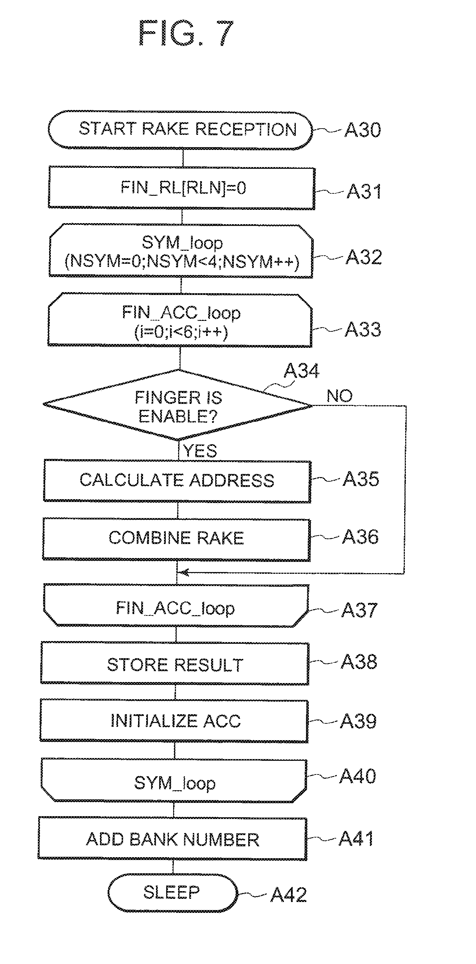

For the variables used in flowcharts of FIG. 6 and FIG. 7, ACC denotes a RAKE receiving variable, DATA[] denotes read data from an address complying with the address map of FIG. 8, RLN denotes a base station number, Result [3] denotes a demodulated-output storage register, and i and HSYM denote loop counters. FIN_EN_RL [3] denotes an effective finger information parameter (which is effective when a bit corresponding to a finger number is 1) for each base station, FIN_RL [3] denotes a finger processing completion flag (which is effective when a bit corresponding to a finger number is 1) for each base station, and BANK_CNT_RL [3] denotes a bank number counter for each base station. SLOT_HEAD denotes a bank head flag (indicative of the bank head when the bank head flag is 1), and RLN denotes a base station number storing register.

The DSP-section H4 enters an initialization process after being reset, in which the DSP section H4 sets the parameter FIN_EN_RL[] and zero-clears the internal-state FIN_RL[] and BANK_CNT_RL[], and then enters a SLEEP state.

FIG. 6 is a flowchart of a portion for determining that all the fingers for each base station have been collected, of Embodiment 2. Here, the BANK completion signal H1N4, which is generate after each finger processing is finished in the unit of BANK, is executed as an interrupt process.

First, the interrupt process is started (Step A20). The base station number H1N3 of the finger 3N is stored in the variable RLN (Step A21). Next, whether or not it is the BANK head (Step A22) is determined, and if the variable SLOT_HEAD is 1, then 0 is substituted into BANK_CNT_RL [RLN] (Step A23). If the variable SLOT_HEAD is 0, the flow proceeds to Step A24.

The variable SLOT_HEAD is contained in the BANK completion signal H1N4. A bit corresponding to the finger number of FIN_RL [RLN] is set to 1 (Step A24) . Whether or not the finger processing of the variable RLN has been completed is determined (Step A25), and if FIN_RL [RLN] matches with FIN_EN_RL [RLN], then RAKE reception is performed (Step A26). If FIN_RL [RLN] does not match with FIN__EN_RL [RLN], the DSP section H4 enters the SLEEP state (Step A27).

FIG. 7 is a control flowchart of the DSP section for each base station, of Embodiment 2. When RAKE reception is started (Step A30), FIN_RL [RLN] is zero-cleared, first (Step A31). The variable NSYM loops from 0 to 3 with an increment of 1 (Step A32). The variable i loops from 0 to 5 with an increment of 1 (Step A33). Whether or not the finger is enabled is determined (Step A34).

If the i-th bit of FIN_EN_RL [RLN] is 0, the flow will loop (Step A37). If the i-th bit of FIN_EN_RL [RLN] is 1, then a value obtained by left-shifting i by 8 bits and a value obtained by left-shifting BANK_CNT_RL [RLN] by 4 bits and NSYM are added, and the resultant value is substituted into the variable ADDR (Step A35). ACC and data read from the address ADDR are added to the variable ACC, and then the RAKE reception is performed (Step A36). After this processing, the flow will loop until the condition of Step A33 is met (Step A37).

The ACC is substituted into the variable RESULT [RLN], and then RESULT [RLN] is outputted as the demodulated output 11, while RLN is outputted as the demodulated base station number 230 (Step A38). ACC is zero-cleared (Step A39). After this processing, the flow will loop until the condition of Step A32 is not met (Step A37). Add 1 to BANK_CNT_RL [RLN] (Step A41). Upon completion of this processing, the DSP section H4 enters the SLEEP state (Step A42).

As described above, according to the present invention, channels can be received from multiple base stations at different timings that are specified by the HSUPA standard in the following manner. The arbitration circuit controls reception from multiple base stations, which reception has been a problem to be solved, by using information on base station numbers, regardless of whether or not access to each of the base stations is in a conflict state. Accordingly, the RAKE combiner does not combine data from multiple different base stations as data from a single base station, but correctly combines the data in the unit of base station according to the finger information that is set, as belonging to each of the base stations, in the parameter register. Here, the data is combined in the order of the base stations for which the reception of all the BANK completion signals is completed. Thereafter, the RAKE combiner demodulates and outputs the combined data.

It is apparent that the present invention is no limited to the above embodiments, but may be modified and chanced without departing from the scope and spirit of the invention.

According to an embodiment, an order to support channels for the HSUPA standard, a base station number is given to each finger at the time of RAKE reception so that the base station numbers can be discriminated from each other, thereby allowing RAKE reception to be performed separately for each different base station. Since a function to identify a base station to which each finger is assigned is provided, data from a base station 0 and data from a base station 1 can be combined as data from different base stations and thus correct data for each base station can be received.

## Claims

1. A RAKE receiver that asynchronously receives a plurality of baseband signals output from a plurality of base stations, said RAKE receiver comprising:
a plurality of fingers which, upon receipt of said plurality of baseband signals, output a plurality of output signals corresponding to said plurality of baseband signals; and
a RAKE combiner which receives said output signals from said plurality of fingers, and performs a combining processing based on said output signal from one of said plurality of fingers which is associated with a certain base station.

2. The RAKE receiver according to claim 1, further comprising:
an arbitration circuit section which, with reference to a parameter register for storing effective fingers respectively corresponding to said plurality of base stations, identifies one of said effective fingers, corresponding to said certain base station, wherein
said RAKE combiner notifies said arbitration circuit section of, by BANK completion, said effective finger from which symbolic data is read.

3. The RAKE receiver according to claim 2, wherein said parameter register is located outside said RAKE receiver.

4. The RAKE receiver according to claim 1, 2 or 3, wherein upon receipt of said BANK completions respectively corresponding to all fingers belonging to said effective fingers corresponding to said certain base station from said RAKE combiner, said arbitration circuit section outputs to said RAKE combiner a RAKE reception start signal with an attachment of a base station number that is given to said certain base station.

5. The RAKE receiver according to one of claims 1 to 4, wherein said RAKE combiner reads said symbolic data by sending a read signal to a finger corresponding to said certain base station.

6. A spread-spectrum receiver, comprising said plurality of fingers, said RAKE receiver, and said parameter register.
